# EUROPEAN PATENT APPLICATION

(11) **EP 2 202 427 A1**
(43) Date of publication of application: **30.06.2010**
(21) Application number: 08842576.4
(22) Date of filing: 23.10.2008
(51) Int. Cl.: F16H 25/22, F16C 29/06

(54) **BALL SCREW WITH BALL SPLINE**

(30) Priority: 24.10.2007 JP 2007275906
(71) Applicant: JTEKT Corporation, Osaka-shi Osaka 542-8502 (JP)
(72) Inventor: KOYAGI, Katsura, Osaka-shi Osaka 542-8502 (JP); INOUE, Masahiro, Osaka-shi Osaka 542-8502 (JP)
(74) Representative: Schaeberle, Steffen
(86) International application number: PCT/JP2008/069230
(87) International publication number: WO 2009/054452

(57) **Abstract**

A ball screw with ball splines is provided which eliminates a fear that balls within a screw groove override spline grooves.

A ball screw with ball splines includes a screw shaft 1 having a screw groove 6 and a plurality of straight line-like spline grooves 7 extending in an axial direction which are formed on an outer circumferential surface thereof, a screw nut 2 through which the screw shaft 1 is inserted and on which a screw balls circulating path is formed which corresponds to the screw groove 6 on the screw shaft 1, a spline nut 3 through which the screw shaft 1 is inserted and on which spline balls circulating paths are formed which correspond to the spline grooves 7 on the screw shaft 1, a plurality of screw balls 4 installed in the screw balls circulating path on the screw nut 2, and a plurality of spline balls 5 installed in the spline balls circulating paths on the spline nut 3. A radial position at a bottom 7a of the spline groove 7 on the screw shaft 1 lies further radially outwards than a radially outermost portion of a ball contact portion of the screw groove 6 where the ball contacts when a maximum load is exerted thereon.

## Description

### Technical Field

The present invention relates to a ball screw with ball splines.

### Background Art

As a ball screw with ball splines, there is known one which includes a screw shaft having a screw groove and a plurality of straight-line spline grooves extending in an axial direction which are formed on an outer circumferential surface thereof, a screw nut through which the screw shaft is inserted and on which a screw balls circulating path is formed which corresponds to the screw groove on the screw shaft, a spline nut through which the screw shaft is inserted and on which spline balls circulating paths are formed which correspond to the spline grooves on the screw shaft, a plurality of screw balls which are installed in the screw balls circulating path on the screw nut and a plurality of spline balls which are installed in the spline balls circulating paths on the spline nut (refer to Patent Document 1).
Patent Document 1: JP-A-6-300106

### Disclosure of the Invention

### Problem that the Invention is to Solve

In the conventional ball screw with ball splines, since the screw groove and the screw splines intersect each other on the screw shaft, there is caused a problem that the balls in the screw groove override the spline grooves to thereby reduce the life of the ball screw.

An object of the invention is to provide a ball screw with ball splines which can solve the problem and which is free from a fear that balls in a screw groove override spline grooves.

### Means for Solving the Problem

According to the invention, there is provided a ball screw with ball splines comprising a screw shaft having a screw groove and a plurality of straight line-like spline grooves extending in an axial direction which are formed on an outer circumferential surface thereof, a screw nut through which the screw shaft is inserted and on which a screw balls circulating path is formed which corresponds to the screw groove on the screw shaft, a spline nut through which the screw shaft is inserted and on which spline balls circulating paths are formed which correspond to the spline grooves on the screw shaft, a plurality of screw balls installed in the screw balls circulating path on the screw nut, and a plurality of spline balls installed in the spline balls circulating paths on the spline nut, **characterized in that** a radial position at a bottom of the spline groove on the screw shaft lies further radially outwards than a radially outermost portion of a ball contact portion of the screw groove where the ball contacts when a maximum load is exerted thereon.

Since the radial position at the bottom of the spline groove on the screw shaft lies further radially outwards than the radially outermost portion of the ball contact portion of the screw groove where the ball contacts when the maximum load is exerted thereon, there is no fear that the balls in the screw shaft override the spline grooves.

### Advantage of the Invention

According to the ball screw with ball splines of the invention, there is no fear that the balls in the screw groove override the spline grooves, and therefore, there occurs no such situation that the life of the ball screw is reduced.

### Brief Description of the Drawings

[Fig. 1] Fig. 1 is a longitudinal sectional view of a main part of a ball screw with ball splines illustrated by an embodiment of the invention.
[Fig. 2] Fig. 2 is an enlarged sectional view taken along the line II-II in Fig. 1.
[Fig. 3] Fig. 3 is a diagram of an enlarged intersecting portion between an external screw groove and a spline groove on a screw shaft in Fig. 1.

### Best Mode for Carrying out the Invention

Hereinafter, an embodiment of the invention will be described by reference to the drawings.

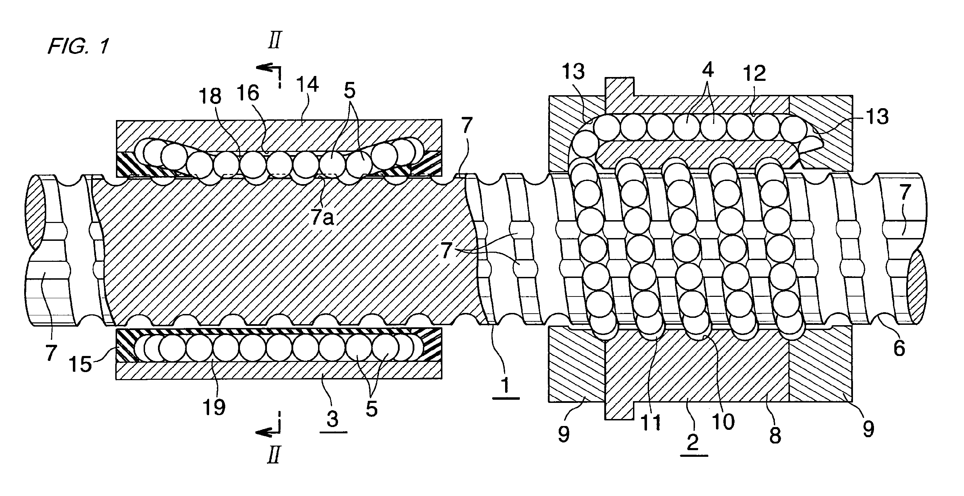

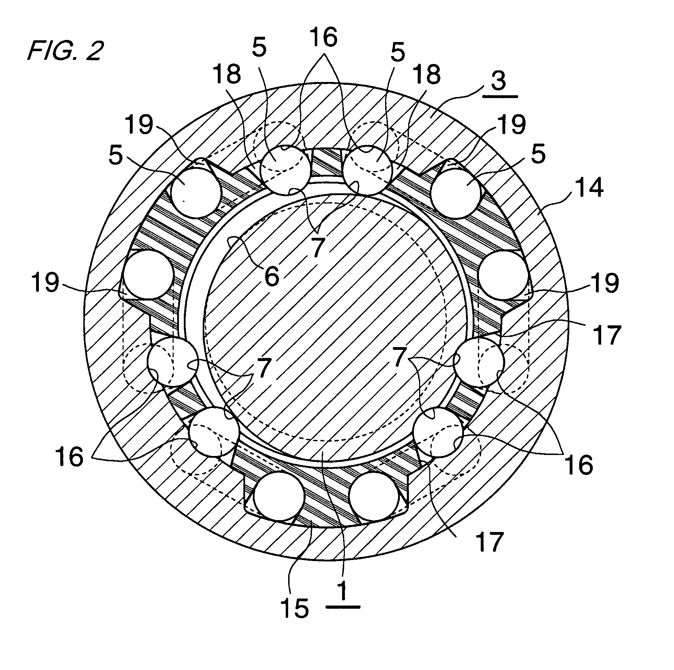

Fig. 1 is a longitudinal sectional view of a main part of a ball screw with ball splines, and Fig. 2 is an enlarged cross sectional view of Fig. 1. In the following description, left and right are referred to as left and right in Fig. 1.

A ball screw includes a screw shaft (1) of a steel which extends in a left-right direction, a screw nut (2), a spline nut (3), a large number of screw balls (4) and a large number of spline balls (5).

The screw shaft (1) is a solid shaft having a circular cross section, and a single screw grove (an external screw groove) (6) and a plurality of straight line-like spline grooves (7) extending in an axial direction (the left-right direction) are formed on an outer circumferential surface of the screw shaft (1).

The screw nut (2) includes a cylindrical metallic nut main body (8) and a pair of annular synthetic resin end caps (9) which are attached individually to both axial end faces of the nut main body (8). The end caps (9) are made up of short cylindrical ring members having the same shape and are fixed to both the axial end faces of the nut (8) using fastening devices such as bolts, not shown. The nut (2) is fitted on an outer circumference of the screw shaft (1) with a slight radial gap provided therebetween.

A single screw groove (an internal screw groove) (10) is formed on an inner circumferential surface of the nut main body (8) which corresponds to the external screw groove (6). Confronting spaces of the internal screw groove (10) on the nut main body (8) and the external screw groove (6) on the screw shaft (1) which corresponds to the internal screw groove (10) make up a main passage (11) in which the screw balls (4) roll. A return passage (12) is formed in one position on a circumferential wall of the nut main body (8). The return passage (12) is made up of a through hole having a circular cross section and extending to penetrate through the nut main body (8) over a full axial length thereof.
A groove-like direction turning path (13), which establishes a communication between the main passage (11) and the return passage (12), is formed on an end face of each end cap (9) which confronts the nut main body(8).

The screw balls (4) are installed in the main passage (11), the return passage (12) and the direction turning paths (13), and the screw balls (4) which roll in the main passage (11) are designed to guide a relative rotation of the screw shaft (1) and the screw nut (2). A ball screw circulating path is made up of the main passage (11), the return passage (12) and the direction turning paths (13).

The spline nut (5) includes a substantially cylindrical metallic nut main body (14) and a substantially cylindrical cage (15) which is fixed to an inner circumference of the nut main body (14). The nut (5) is fitted on the outer circumference of the screw shaft (1) with a slight radial gap provided therebetween.

A plurality of straight line-like spline grooves (16) are formed on an inner circumferential surface of the nut main body (14) which correspond to the spline grooves (7) on the screw shaft (1).

Slits (17), which guide the spline balls (5) rolling between both the spline grooves (7)(16), are formed at portions of the cage (15) which correspond to the spline grooves (16) on the nut main body (14). Spaces of both the spline grooves (7)(16) which confront each other via the slits (17) make up main passages (18)in which the spline balls (5) roll. Return paths (19), which establish communications with both left and right end portions of the main passages, are formed in the cage (15) between the nut main body (14) and itself.

The spline balls (5) are installed in the main passages (18) and the return paths (19), and the spline balls (5) rolling in the main passages (18) are designed to a relative linear movement of the screw shaft (1) and the spline nut (3). A spline ball circulating path is made up of the main passages (18) and the return paths (19).

The ball screw is used in such a state, for example, that the spline nut (3) is fixed in a certain predetermined axial position so as neither to rotate nor to move and the screw nut (2) is supported in a certain predetermined axial position so as to rotate but not to move.

By rotating the screw nut (2) in the aforesaid state, the screw shaft (1) does not rotate but moves linearly in the axial direction by being guided by the spline nut (3). As this occurs, in the screw nut (2), the screw balls (4) which are rolling in the main passage (11) are turned to change their rolling direction in the direction turning path (13) in one of the end caps (9) to thereby be introduced into the return passage (12) in the nut main body (8) and move through the return passage (12) towards the other end cap (9) side. The screw balls (4) which have moved through the return passage (12) to reach the other end cap (9) are then turned to change their rolling direction in the direction turning path (13) in the other end cap (9) and are returned to the main passage (11). By doing so, the screw balls (4) are recirculated through the screw balls circulating path. In the spline nut (3), the spline balls 5, which are rolling in the main passages (18), are introduced in to the return passage (19) from one end portions of the main passages (18), move through the return passage (19) towards the other end portion sides of the main passages (18) and are introduced into the other end portions of the main passages (18). By doing so, the spline balls (5) are recirculated through the spline balls circulating path.

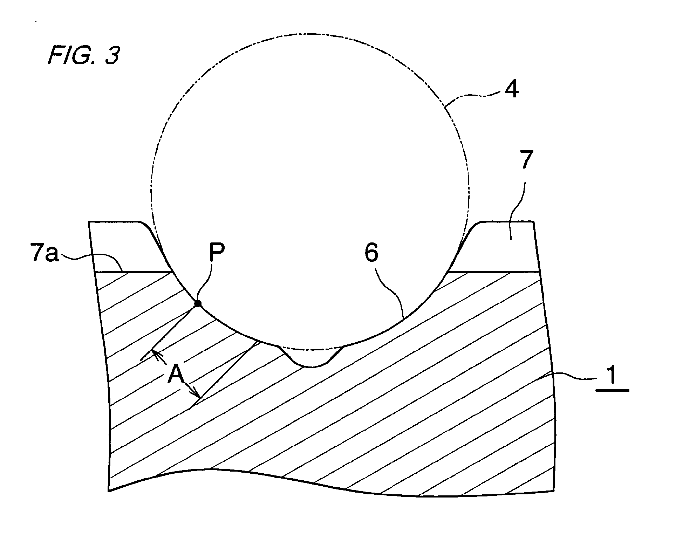

Fig. 3 shows an intersecting portion, which is enlarged, between the external screw groove (6) and the spline groove (7) on the screw shaft (1).

In Fig. 3, a portion denoted by reference character A is a ball contact portion where the screw ball (4) contacts the external screw groove (6) when a maximum load is exerted thereon.

In the ball screw, a bottom (7a) of the spline groove (7) lies further radially outwards than a radially outmost portion P of a ball contact portion A of the external screw groove (6) where the ball contacts when a maximum load is exerted thereon.

When the screw nut (2) is rotated relative to the screw shaft (1) in the way described above, the screw balls (4) roll in the screw groove (6) across the spline grooves (7) on the screw shaft (1). As this occurs, as has been described above, since the bottom (7a) of the spline groove (7) lies further radially outwards than the radially outmost portion P of the ball contact portion A of the external screw groove (6) where the ball contacts when the maximum load is exerted thereon and there is a gap between the radially outermost portion P of the ball contact portion A and the bottom (7a) of the spline groove (7), there is no fear that the screw balls (4) in the external screw groove (6) override the spline grooves (7).

The configurations of the screw nut and the spline nut of the ball screw with splines are not limited to those of the embodiment but can be modified as required.

In the embodiment, while the screw nut of the end-cap type has been described, the invention can also be applied to a tube-type screw nut and a top-type (a deflector-type) spline ball screw.

In the embodiment, while the single screw groove is formed, the invention can also be applied to a ball screw with ball splines which has a multiplicity of screw grooves formed thereon.

## Claims

1. A ball screw with ball splines comprising a screw shaft having a screw groove and a plurality of straight line-like spline grooves extending in an axial direction which are formed on an outer circumferential surface thereof, a screw nut through which the screw shaft is inserted and on which a screw balls circulating path is formed which corresponds to the screw groove on the screw shaft, a spline nut through which the screw shaft is inserted and on which spline balls circulating paths are formed which correspond to the spline grooves on the screw shaft, a plurality of screw balls installed in the screw balls circulating path on the screw nut, and a plurality of spline balls installed in the spline balls circulating paths on the spline nut, wherein a radial position at a bottom of the spline groove on the screw shaft lies further radially outwards than a radially outermost portion of a ball contact portion of the screw groove where the ball contacts when a maximum load is exerted thereon.
